(19) Europäisches Patentamt
European Patent Office
Office européen des brevets

(11) Publication number: 0 347 502 B1

(12) # EUROPEAN PATENT SPECIFICATION

(45) Date of publication of patent specification: **26.05.93**

(51) Int. Cl.⁵: **C08L 23/32**, C08L 27/12, //(C08L23/32,27:12)

(21) Application number: **88305792.9**

(22) Date of filing: **22.06.88**

(54) **Elastomeric blend composition.**

(43) Date of publication of application:
**27.12.89 Bulletin 89/52**

(45) Publication of the grant of the patent:
**26.05.93 Bulletin 93/21**

(84) Designated Contracting States:
**BE DE ES FR GB IT NL SE**

(56) References cited:
**US-A- 3 562 195**
**US-A- 4 543 385**

(73) Proprietor: **EXXON RESEARCH AND ENGINEERING COMPANY**
**P.O.Box 390, 180 Park Avenue**
**Florham Park, New Jersey 07932(US)**

(72) Inventor: **Agarwal, Pawan Kumar**
**580 Cabot Hill Road**
**Bridgewater New Jersey 08807(US)**
Inventor: **Petrik, William Michael**
**52 Adams Court**
**Flemington New Jersey 08822(US)**
Inventor: **Garner, Richard Thomas**
**48 Chaucer Drive**
**Berkeley Heights New Jersey 07922(US)**

(74) Representative: **Fletcher Watts, Susan J. et al**
**ESSO Engineering (Europe) Ltd. Patents & Licences Mailpoint 72 Esso House Ermyn Way**
**Leatherhead, Surrey KT22 8XE (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a composition comprising a blend of elastomers.

A substantial segment of the plastics and rubber fabrication industry employs fabrication techniques known as extrusion or injection molding to form articles which can be classified as sheet, profiles, tubing, film, and molded goods. The applications employing these fabrication techniques such as automobile bumper parts, weather stripping, refrigerator door seals, and gaskets, etc. require materials which are flexible and tough. Two broad classifications of materials which have been used are vulcanized elastomers and plasticized thermoplastics such as polyvinyl chloride (PVC). The fabrication of articles based on vulcanized elastomers is a major item of cost involving the vulcanization procedure. Not only is this step costly from an energy intensive viewpoint, but it is time consuming. The use of plasticating extrustion and injection molding for thermoplastic materials is more economical and results in high extrusion rates for materials such as plasticized PVC. While these materials possess a degree of flexibility, they do not have a good rubbery feel or good low temperature flexibility. It is therefore desirable to have materials which can be processed on plastics type processing equipment at conventional plastics rates and which possess the flexibility and subjective rubbery characteristics of vulcanized elastomers.

US Patent 3 562 195 discloses an elastomeric composition comprising a fluorovinylidene propylene copolymer and an ethylene propylene terpolymer. US 4 534 385 discloses an elastomeric composition comprising a major portion of neutralized sulfonated ethylene-propylene-diene-monomer (EPDM) terpolymer and a minor proportion of an unsulfonated ethylene-propylene (EP) copolymer, and optionally a non-polar process oil, filler and preferential plasticizer.

It is an object of the present invention to describe a class of compounds based on sulfonated ethylene-propylene terpolymers which can be processed on plastics type extrusion or injection molding equipment at high rates and which possess improved tear characteristics. One of the essential aspects of the present invention comprises the discovery that only a restricted class of the subject sulfonated elastomers may be readily employed for extrusion or injection molding fabrication. The restrictions are primarily associated with processing and product performance characteristics. These characteristics are to a degree modulated by the type and concentration of various compounding ingredients. The compositions of the instant invention will, therefore, involve a class of compositions based on a restrictive class of sulfonated elastomers.

It has been found surprisingly that compositions formed from blends of a major portion of a neutralized sulfonated EPDM terpolymer and a minor portion of a fluorohydrocarbon elastomer and optionally, fillers, non-polar backbone oils and a preferential plasticizer have suitable rheological and tear properties for the formation of an elastomeric article, such as gaskets, by an extrusion or injection molding process.

Accordingly, it is an object of the present invention to provide unique and novel compositions of matter for producing a high performance elastomeric article having improved tear properties by an extrusion of injection molding process, wherein the compositions of the elastomeric articles have a viscosity at 0.73 sec $^{-1}$ at 200°C of 8 x $10^3$ to 8 x $10^6$ poises and, preferably, a Shore A Hardness of 40 to 85.

According to the present invention there is provided an elastomeric blend composition having improved tear properties and having a viscosity at 0.73 sec $^{-1}$ at 200°C of 8 x $10^2$ to 8 x $10^5$ Pa.s (8 x $10^3$ to 8 x $10^6$ poises), said composition being formable into an elastomeric article, which comprises:

(a) a neutralized sulfonated EPDM terpolymer having a viscosity at 0.73 sec$^{-1}$ and at 200°C of 5 x $10^3$ to 5 x $10^5$ Pa.s (5 x $10^4$ poises to 5 x $10^6$ poises) and 10 to 50 meq. sulfonate groups per 100 grams of said sulfonated EPDM terpolymer, said sulfonate groups being neutralized; and

(b) 2 to 60 parts by weight of a fluorohydrocarbon elastomer per 100 parts of such sulfonated EPDM terpolymer.

The blend compositions of the present invention have improved tear properties.

They may optionally contain a filler and/or a non-polar process oil.

The compositions are readily processable in a conventional extrusion or injection molding process into a high performance elastomeric article such as gaskets.

Various critically selected additives can be incorporated into the blend compositions such as a polyolefin thermoplastic for further modification of hardness as well as rheological properties, a pigment, an external, internal lubricant for improvement of the physical appearance such as shine of the finished article as well as the ability to easily process the composition during extrusion, and a reinforcing filler such as silica or carbon black, wherein the reinforcing filler constitutes a minor portion of the composition.

The neutralized sulfonated elastomeric polymers of this present instant invention are EPDM terpolymers.

The EPDM terpolymers which are used in the blend compositions as the unsulfonated species are similar or identical to those used to form the sulfonated EPDM terpolymers and are low unsaturated polymers having 1 to 10.0 wt.% olefinic unsaturation, more preferably 2 to 8, most preferably 3 to 7 defined according to the definition as found in ASTM-D-1418-64 and is intended to mean terpolymers containing ethylene and propylene in the backbone and a diene which introduces unsaturation in the side group. Illustrative methods for producing these terpolymers are found in U.S. Patent 3,280,082, British Patent 1,030,289 and French Patent 1,386,600. The preferred polymers contain 25 to 75 wt.%, more preferably 40 to 75 wt.%, ethylene and 1 to 10 wt.%, more preferably 2 to 10 wt.%, of a diene monomer, the balance of the polymer being propylene, e.g. 15 to 58 wt.%. Preferably, the polymer contains 30 to 70 wt.% ethylene, e.g. 50 wt.% and 2.6 to 8.0 wt.% diene monomer, e.g. 5.0 wt.%. The diene monomer is preferably a non-conjugated diene.

Illustrative of these non-conjugated diene monomers which may be used in the terpolymer (EPDM) are 1, 4-hexadiene; dicyclopentadiene, 5-alkylidene-2-norbornenes and 5-alkylenyl-2-norbornenes such as 5-ethylidene-2-norbornene, 5-methylene-2-norbornene and 5-propenyl-2-norbornene; and methyl tetrahydroindene.

A typical EPDM is Vistalon 2504 (Exxon Chemical Co.), a terpolymer having a Mooney viscosity (ML, 1 + 8, 100°C (212°F)) of 40 and having an ethylene content of 50 wt.% and a 5-ethylidene-2-norbornene content of 5.0 wt.%. The Mn of Vistalon 2504 is 47,000, the Mn is 145,000 and the Mw is 174,000.

Another EPDM terpolymer Vistalon 2504-20 is derived from Vistalon 2504 (Exxon Chemical Co. - Vistalon is a trade mark) by a controlled extrusion process, wherein the resultant Mooney viscosity at 100°C (212°F) is 20. The Mn of Vistalon 2504-20 is 26,000, the Mv is 90,000 and the Mw is 125,000.

Nordel 1320 (DuPont - Nordel is a trade mark) is another terpolymer having a Mooney viscosity at 100°C (212°F) of 25 and having 53 wt.% of ethylene, 3.5 wt.% of 1,4-hexadiene, and 43.5 wt.% of propylene.

The EPDM terpolymers of this invention have a number average molecular weight (Mn) of 10,000 to 200,000, more preferably of 15,000 to 100,000, most preferably of 20,000 to 60,000. The Mooney viscosity (ML, 1 + 8 100°C (212°F) of the EPDM terpolymer is 5 to 60, more preferably 10 to 50, most preferably 15 to 40. The Mv of the EPDM terpolymer is preferably below 350,000 and more preferably below 300,000. The Mw of the EPDM terpolymer is preferably below 500,000 and more preferably below 350,000.

In carrying out the sulfonation of the EPDM terpolymer of the instant invention, the EPDM terpolymer is dissolved in a non-reactive solvent such as a chlorinated aliphatic solvent, chlorinated aromatic hydrocarbon, an aromatic hydrocarbon, or an aliphatic hydrocarbon such as carbon tetrachloride, dichloroethane, chlorobenzene, benzene, toluene, xylene, cyclohexane, pentane, isopentane, hexane, isohexane or heptane. The preferred solvents are the lower boiling aliphatic hydrocarbons. A sulfonating agent is added to the solution of the EPDM terpolymer and non-reactive solvent at a temperature of -100°C to 100°C for a period of time of 1 to 60 minutes, most preferably at room temperature for 5 to 45 minutes; and most preferably 15 to 30. Typical sulfonating agents are described in U.S. Patents 3,642,728 and 3,836,511. These sulfonating agents are selected from an acyl sulfate, a mixture of sulfuric acid and an acid anhydride or a complex of a sulfur trioxide donor and a Lewis base containing oxygen, sulfur, or phosphorous. Typical sulfur trioxide donors are $SO_3$, chlorosulfonic acid, fluorosulfonic acid, sulfuric acid, oleum, etc. Typical Lewis bases are: dioxane, tetrahydrofuran, tetrahydrothiophene or triethyl phosphate. The most preferred sulfonation agent for this invention is an acyl sulfate selected from the group consisting essentially of benzoyl, acetyl, propionyl or butyryl sulfate. The acyl sulfate can be formed in situ in the reaction medium or pregenerated before its addition to the reaction medium in a chlorinated aliphatic or aromatic hydrocarbon.

It should be pointed out that neither the sulfonating agent nor the manner of sulfonation is critical, provided that the sulfonating method does not degrade the polymeric backbone of the EPDM terpolymer. The reaction is quenched with an aliphatic alcohol such as methanol, ethanol or isopropanol, with an aromatic hydroxyl compound, such as phenol, a cycloaliphatic alcohol such as cyclohexanol or with water. The unneutralized sulfonated EPDM terpolymer has 10 to 100 meq sulfonated groups per 100 grams of sulfonated polymer, more preferably 15 to 50; and most preferably 20 to 40. The meq of sulfonate groups per 100 grams of polymer is determined by both titration of the polymeric sulfonic acid and Dietert Sulfur analysis. In the titration of the sulfonic acid, the polymer is dissolved in solvent consisting of 95 parts of toluene and 5 parts of methanol at a concentration level of 50 grams per liter of solvent. The unneutralized form is titrated with ethanolic sodium hydroxide to an Alizarin-Thymolphthalein end-point.

The unneutralized sulfonated EPDM terpolymer is gel free and hydrolytically stable. Gel is measured by stirring a given weight of polymer in a solvent comprised of 95 toluene-5-methanol at a concentration of

5 wt%, for 24 hours, allowing the mixture to settle, withdrawing a weighted sample of the supernatant solution and evaporating to dryness.

Hydrolytically stable means that the acid function, in this case the sulfonic acid, will not be eliminated under neutral or slightly basic conditions to a neutral moiety which is incapable of being converted to highly ionic functionality.

Neutralization of the unneutralized sulfonated EPDM terpolymer is done by the addition of a solution of a basic salt to the acid form of the sulfonated elastomeric polymer dissolved in the mixture of the aliphatic alcohol and non-reactive solvent. The basic salt is dissolved in a binary solvent system consisting of water and/or an aliphatic alcohol. The counterion of the basic salt is selected from the group consisting of antimony, iron, aluminum, lead, and Groups I-A, II-A, I-B and II-B of the Periodic Table of Elements and mixtures thereof. The anion of the basic salt is selected from the group consisting of a carboxylic acid having from 1 to 4 carbon atoms, a hydroxide, or alkoxide and mixtures thereof. The preferred neutralizing agent is a metal acetate, more preferably zinc acetate. Sufficient metal salt of the carboxylic acid is added to the solution of the unneutralized sulfonated EPDM terpolymer to effect neutralization. It is preferable to neutralize at least 95% of the sulfonate groups, more preferably 98%, most preferably 100%.

Examples of metals oxides useful in preparing metal sulfonates are MgO, CaO, BaO, ZnO, $Ag_2O$, $PhO_2$ and $Pb_3O_4$. Useful examples of metal hydroxides are NaOH, KOH, LiOH, $Mg(OH)_2$ and $Ba(OH)_2$. The resultant neutralized sulfonated EPDM terpolymer has a viscosity of 0.73 $sec^{-1}$ at 200°C of $3 \times 10^4$ to $5 \times 10^7$ Pa.s ($3 \times 10^5$ to $5 \times 10^8$ poises), more preferably of $5 \times 10^4$ to $5 \times 10^5$ Pa.s ($5 \times 10^5$ to $5 \times 10^6$ poises) and most preferably $5 \times 10^4$ to $3.5 \times 10^5$ Pa.s ($5 \times 10^5$ to $3.5 \times 10^6$ poises).

A means of characterizing the apparent molecular weight of a polymer involves the use of melt rheological measurements. For ionic polymers, this is the preferred method since solution techniques are difficult to interpret due to the complex nature of the ionic association. Melt rheological measurements of apparent viscosity at a controlled temperature and shear rate can be used as a measure of apparent molecular weight of an ionic polymer. Although the exact relationship between melt viscosity and apparent molecular weight for these ionic systems is not known, for the purposes of this invention the relationship will be assumed to be one of direct proportionality. Thus, in comparing two materials, the one with the higher melt viscosity will be associated with the higher apparent molecular weight.

The melt viscosity of the systems investigated were determined by the use of an Instron Capillary Rheometer. Generally, the melt viscosity measurements were made at a temperature of 200°C and at various shear rates corresponding to crosshead speeds from 0.127 mm/min to 508 mm/min (.005 in/min to 20 in/min). The apparent viscosity at 200°C and at a shear rate of .73 $sec^{-1}$ (0.127 mm/min) (.005 in/min) is employed as a characterization parameter in this invention. A measure of the melt elasticity of a given system can also be obtained from these rheological measurements. A type of flow instability known as melt fracture is exhibited by many polymeric materials of high molecular weight. This phenomenon is shear sensitive and thus will generally exhibit itself at a given shear rate and temperature. The shear rate for the onset of melt fracture indicates the upper shear rate for processing a given material. This is used as a characterization parameter for compounds employed in extrusion processing.

The metal neutralized sulfonated EPDM terpolymers at the higher sulfonate levels possess extremely high melt viscosities and are thereby difficult to process. The addition of ionic group plasticizers markedly reduces melt viscosity and frequently enhances physical properties.

To the neutralized sulfonated EPDM terpolymer may be added, in either solution or to the crumb form of the sulfonated elastomeric polymer, a preferential plasticizer selected from the group consisting of carboxylic acids having 5 to 30 carbon atoms, more preferably 8 to 22 carbon atoms, and basic salts of these carboxylic acids, wherein the metal ion of the basic salt is selected from the group consisting of aluminum, ammonium, lead and Groups I-A, II-A, I-B and II-B of the Periodic Table of Elements and mixtures thereof. The carboxylic acids are selected from the group consisting essentially of lauric, myristic, palmitic or stearic acids and mixtures thereof; e.g. zinc stearate, magnesium stearate, or zinc laurate. Preferably the plasticizer is a combination of a carboxylic acid and metallic salt of said carboxylic acid, a metal ion of said metallic salt being selected from aluminum, antimony, iron, lead and Groups I-A, II-A, I-B, and II-B of the Periodic Table of Elements and mixtures thereof.

When used, the plasticizer is incorporated into the neutralized sulfonated elastomeric polymer at 1 to 60 parts by weight per 100 parts of the neutralized sulfonated EPDM terpolymer more preferably at 5 to 40, and most preferably at 7 to 25. The metallic salt of the fatty acid can also be used as neutralizing agent. In the case of the neutralizing agent and plasticizer being the identical chemical species, additional metallic salt is added over the required levels of neutralization. Alternatively, other preferential plasticizers are selected from organic esters, phenols, trialkyl phosphates, alcohols, amines, amides, ammonium and amine salts of carboxylic acids and mixtures thereof. The preferred plasticizers are selected from the group

consisting of fatty acid and metallic salts of fatty acid and mixtures thereof. The resultant neutralized sulfonated EPDM terpolymer with preferential plasticizer is isolated from the solution by conventional steam stripping and filtration.

The resultant neutralized and plasticized sulfonated EPDM terpolymer has a viscosity at 200 °C and a shear rate of .73 $sec^{-1}$ of 5 x $10^3$ to 5 x $10^5$ Pa.s (5 x $10^4$ to 5 x $10^6$ poise), more preferably of 1 x $10^4$ to 1 x $10^5$ Pa.s (1 x $10^5$ to 1 x $10^6$ poise) and most preferably 2 x $10^4$ to 1 x $10^5$ Pa.s of (2 x $10^5$ to 1 x $10^6$ poise).

The neutralized sulfonated EPDM terpolymer is blended with a fluorohydrocarbon elastomer and optionally a filler and a non-polar backbone process oil by techniques well known in the art. For example, the blend composition can be compounded on a two-roll mill. Other methods known in the art which are suitable for making these compositions include those methods employed in the plastic and elastomer industries for mixing polymer systems. An excellent polymer blend composition of this invention can be obtained through the use of a high shear batch intensive mixer called the Banbury. Alternatively, economic advantages in terms of time and labor savings can be obtained through the use of a Farrel Continuous Mixer, a twin screw extruder, or tandem extrusion techniques which are continuous mixing types of equipment. The Banbury mixing device is the preferred batch type mixer, and the twin screw extruder is the preferred continuous mixer.

The amount of the fluorohydrocarbon elastomer in the blend composition comprise 2 to 60 parts by weight per 100 parts of the metal neutralized sulfonated EPDM terpolymer, more preferably 3 to 50 and most preferably 4 to 40.

Fluorohydrocarbon elastomers usable in the present invention may be chosen from a family of fluoropolymers which are manufactured by DuPont. These fluorohydrocarbon polymers are sold under the DuPont trademark, Viton®. Viton® polymers, generally speaking, are copolymers of vinylidene fluoride and hexafluoropropylene, having the following chemical structure:

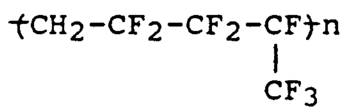

Similar types of fluorocarbon polymers are also commercially manufactured by the 3M Company and are sold under their trademark Fluorel®. A variety of fluorocarbon polymers, varying both in the molecular weight and respective ratio of copolymer contents are available. The commercial success of both such polymers, Viton® and Fluorel®, stems from their exceptional thermal, chemical and oxidative properties. The fluorocarbon elastomers can readily be crosslinked via radiation, peroxides and amine curative agents. The resulting products are excellent for various military and industrial applications. Any member of such fluorocarbon polymers could be used in the present invention, which have the desired range of molecular weight and copolymer composition. Typically, the useful compositions involve the use of vinylidene fluoride-hexafluoropropylene copolymers whose molecular weight ranges from 20,000 to 500,000, having Mooney viscosity range from 45-65. The shore hardness of such copolymers typically ranges from about 50 to about 100.

The fillers which can be optionally employed in the present invention are selected from the group consisting of carbon blacks, talcs, ground calcium carbonate, water precipitated calcium carbonate, and delaminated, calcined and hydrated clays and mixtures thereof. These fillers are incorporated into the blend composition at less than 300 parts by weight per 100 parts of the neutralized sulfonated EPDM terpolymer, more preferably at less than 200. Typically, these fillers have a particle size of 0.0 to 20 µm (0.0 to 20 microns), more preferably less than 15 µm (15 microns), and most preferably less than 10 µm (10 microns). The oil absorption as measured by grams of oil absorbed by 100 grams of the inorganic filler is 10 to 100, more preferably 10 to 85 and most preferably 10 to 75. Typical inorganic fillers employed in this invention are illustrated in Table I. Reinforcing fillers such as carbon blacks typically have sizes below 0.1 microns and oil absorption above 100. These reinforcing fillers are optionally incorporated alone or in addition to non-reinforcing fillers at a ratio of less than 1 part of reinforcing filler to 1 part of non-reinforcing filler, more preferably less than 0.5 and most preferably less than 0.3.

TABLE I

| Filler | Code # | Oil Absorption grams of oil/ 100 grams of filler | Specific gravity | Avg. Particle Size µm (Micron) | pH |
|---|---|---|---|---|---|
| calcium carbonate ground | Atomite | 15 | 2.71 | | 9.3 |
| calcium carbonate precipitated | Purecal U | 35 | 2.65 | .03-.04 | 9.3 |
| delaminated clay | Polyfil DL | 30 | 2.61 | 4.5 | 6.5-7.5 |
| hydrated clay | Suprex | | 2.6 | 2 | 4.0 |
| calcined clay | Icecap K | 50-55 | 2.63 | 1 | 5.0-6.0 |
| talc | | | | | |
| magnesium silicate | Mistron Vapor | 60-70 | 2.75 | 2 | 9.0-7.5 |
| alumino silicate | | | | | |

The oils which can be optionally employed in the present invention are non-polar process oils having less than about 2 wt% polar type compounds as measured by molecular type clay gel analysis. These oils are selected from paraffinics ASTM Type 104B as defined in ASTM-D-2226-70, aromatics ASTM Type 102 or naphthenics ASTM Type 104A, wherein the oil has a flash point by the Cleveland open cup of at least 177°C (350°F), a pour point of less than 4°C (40°F), a viscosity of 70 to 3000 s.s.u.'s at 38°C (100°F) and a number average molecular weight of 300 to 1000, and more preferably 300 to 750. The

preferred process oils are paraffinics. Table II illustrates typical oils encompassed by the scope of this invention.

The oils are optionally incorporated into the blend composition at a concentration level of less than 150 parts by weight per 100 parts of the neutralized sulfonated EPDM terpolymers; more preferably at 5 to 150, and most preferably at 10 to 150.

TABLE II

| Type Oil | Oil Code # | Viscosity ssu | $M_n$ | % Polars | % Aromatic | % Saturates |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Paraffinic | Tufflo 6056 | 495 | - | 0.0 | 0.9 | 99.1 |
| Aromatic | Flexon 340 | 120 | - | 1.3 | 70.3 | 28.4 |
| Naphthenic | Flexon 765 | 505 | - | 0.9 | 20.8 | 78.3 |
| Naphthenic | Tufflo 6054 | 580 | - | 0.0 | 8.0 | 92.0 |

The invention will now be described with reference to the following non-limitative Examples 2 and 3.

In all Examples the neutralized sulfonated EPDM terpolymer had a viscosity at 0.73 $sec^{-1}$ and at 200 °C of from 5 x $10^3$ to 5 x $10^5$ Pa.s (5 x $10^4$ poises to 5 x $10^6$ poises); and had 10 to 50 meq sulfonate groups per 100g of the sulfonated terpolymer, which groups were neutralized.

The accompanying Figure 1 illustrates a graph of stress versus elongation for some typical blend compositions of the instant invention.

Example 1 – Preparation of Sulfo-EPDM Polymer

Five hundred grams of an EPDM terpolymer (MD-76-5) was dissolved under agitation in 5,000 ml of n-hexane at about 40°C. After all this polymer was dissolved, the solution was cooled to low temperature and 25.83 ml of active anhydride (273.38 mmoles) was added. After that, while stirring the mixture, 9.46 cc of 95% $H_2SO_4$ (17.25 mmoles) was added drop-wise, the stirring of the solution was continued for an additional 30 minutes for the sulfonation reaction to complete. After this period the sulfonation reaction was inactivated by adding 42.94 gm of zinc acetate dissolved in 400/30 ml mixture of $CH_3OH/H_2O$. Antioxidant 2246 (3.75 gm) was added to the cement and stirring was continued for an additional 30 minutes. The resultant neutralized EPDM terpolymer was isolated by steam stripping. It was then washed with distilled water and pulverized with water in a Waring blender, followed by filtering by a rubber drum. The final drying of the polymer was done in an aromatic dryer at 100°C.

The same is identified as zinc neutralized sulfonated EPDM terpolymer, TP-303.

The sulfur analyses of this sample was done by Dietert sulfur analysis and was found to have a group of 30 meq. per 100 g of sulfonated polymer.

Example 2

In this example blend compositions of sulfonated EPDM and a fluorohydrocarbon were made according to the ratio shown in Table III.

TABLE III

| Blend # | 1 | 2 | 3 |
|---|---|---|---|
| Sulfonated-EPDM (30 meq. Zn) | 100 | 100 | – |
| Fluorohydrocarbon Elastomer (Viton® E-45)* | 40 | – | 100 |

*Viton® is a DuPont trademark of a fluoroelastomer.

The samples were mill-mixed on a 76 x 178 mm (3" x 7") electrical mill at 380°C from 10 to 15 minutes until homogeneous blends were achieved. Samples were then compression molded for tensile and tear propagation properties according to standard ASTM procedures.

(A) Tensile test pads = Molded 51 x 51 x 0.5 mm (2" x 2" x .020") pads for 1-3 minutes at 177°C (350°F).

(B) Tear test samples = Molded 25 x 102 x 0.09 mm (1" x 4" x .0035") specimens for 76 mm (3") preheat, 76 mm (3") full pressure 172 kPa (25 ton psi), 127 mm (5") cooling under pressure at 177°C (350°F).

Example 3

Specimens for tensile properties were tested following the standard ASTM tensile test method at 51 mm (2") crosshead speed at room temperature. Similarly, the tear propagation properties were tested along the lines described in ASTM D-1938-62T method. The ASTM D-1938-62T test essentially is the test to quantitatively measure the resistance to tear propagation in the thin sheeting by a single tear method. This method of test describes the procedure for determining the force in pounds necessary to propagate a tear in thin sheeting (thickness of ~1.0 mm (~0.04 in)) by a single tear method. The force in pounds to propagate a tear across a specimen was measured by employing a table model Instron 1122 using a constant rate-of-grip separation and equipped for recording the load carried by the specimen and the amount of separation of the grips during the test. The separation was controlled at a rate of 254 mm per minute (10 inches per minute). Thickness of the specimens was measured by using a Starrett thickness gauge, model number 655-441. Not less than five specimens of each sample were tested.

Test specimens consisted of strips 76 mm long x 25 mm wide (3 inches long by 1 inch wide), with a clean longitudinal slit 51 mm (2 inches) long, cut using a sharp razor blade.

Test procedure was as follows: One side of the specimen was secured in one grip and the other side in the other grip of the constant rate-of-grip separation Instron tester, using an initial grip separation of 51 mm (2 inches). The specimen was aligned so that its major axis coincided with an imaginary line joining the centers of the grips. A separation speed of 254 mm per minute (10 inches per minute) was used and the force was recorded on a load-time chart needed to propagate the tear through the entire un-slit 25 mm (1 inch) portion. The resulting data are shown in Table IV.

TABLE IV

| Blend # | 1 | 2 | 3 |
|---|---|---|---|
| Tensile Strength* | | | |
| 100% Moduls, kPa (psi) | 1503(218) | 2034(295) | 496(72) |
| Tensile Strength, kPa (psi) | 2572(373) | 7302(1059) | 14 (2) |
| % Elongation | 260 | 280 | >1000 |
| Tear Propagation | | | |
| Average Tear Propagation kg (lbs) | 15.2(33.6) | 6.9(15.3) | 16.0(35.2) |
| Average Initial Tear Propagation kg (lbs) | 11.8(26.1) | - | - |
| Average Maximum Tear Propagation kg (lbs) | 15.2(33.6) | - | - |
| (No. of Samples Tested) | 9 | 8 | 7 |
| (Standard Deviation) | 8.2 | 0.5 | 1.2 |
| (Average Sample Thickness, mm (in.) | 0.91(0.036) | 0.91(0.36) | 0.79(0.031) |

* - Method ASTM D-935-B; room temperature, 22 hours.

It is clear from the above Table IV that sample 2 has significantly inferior tear properties than the other two. Sample 1, which has about 40 parts of a fluorohydro- carbon elastomer, has about a factor of 2 higher tear resistance strength than sample 2, which is just a sulfonated EPDM polymer by itself.

**Claims**

**1.** An elastomeric blend composition having improved tear properties and having a viscosity at 0.73 $sec^{-1}$ and at 200°C of 8 x $10^2$ to 8 x $10^5$ Pa.s (8 x $10^3$ to 8 x $10^6$ poises), said composition being formable into an elastomeric article, which comprises:
(a) a neutralized sulfonated EPDM terpolymer having a viscosity at 0.73 $sec^{-1}$ and at 200°C of 5 x $10^3$ to 5 x $10^5$ Pa.s (5 x $10^4$ poises to 5 x $10^6$ poises) and 10 to 50 meq. sulfonate groups per 100 grams of said sulfonated EPDM terpolymer, said sulfonate groups being neutralized with a counterion selected from antimony, iron, aluminum, lead and Groups I-A, II-A, I-B and II-B of the Periodic Table of Elements and muixtures thereof; and
(b) 2 to 60 parts by weight of a fluorohydrocarbon elastomer per 100 parts of such sulfonated EPDM terpolymer.

**2.** A composition according to claim 1 further including 1 to 60 parts by weight of a plasticizer per 100 parts of said sulfonated EPDM terpolymers, the plasticizer being selected from carboxylic acids having 5 to 30 carbon atoms, basic salts of such acids and mixtures thereof.

**3.** A composition according to any preceding claim, wherein said EPDM terpolymer consists of 40 to 75 wt.% of ethylene, 15 to 58 wt.% of propylene and about 2 to 10 wt.% of a non-conjugated diene.

**4.** A composition according to claim 3, wherein said non-conjugated diene is selected from the group consisting of 1,4-hexadiene, dicyclopentadiene, 5-alkylidene-2-norbornenes, 5-alkylenyl-2-norbornenes and tetrahydroindene.

**5.** A composition according to claim 4, wherein said non-conjugated diene is 5-ethylidene-2-norbornene.

6. A composition according to any preceding claim, further including less than 300 parts by weight of a filler per 100 parts of said sulfonated EPDM terpolymer.

7. A composition according to any preceding claim, further including less than 150 parts by weight of a non-polar process oil per 100 parts of said sulfonated EPDM terpolymer.

8. A composition according to claim 2, wherein said plasticizer has a melting point of at least 25 °C and is selected from carboxylic acids having 8 to 22 carbon atoms, metallic salts of said carboxylic acids, phenols, phosphates, amides, ammonium and amine salts of said carboxylic acids, and amines and mixtures thereof.

9. A composition according to claims 2 or 8, wherein said plasticizer is a combination of a carboxylic acid and metallic salt of said carboxylic acid, a metal ion of said metallic salt being selected from aluminum, antimony, iron, lead and Groups I-A, II-A, I-B, and II-B of the Periodic Table of Elements and mixtures thereof.

**Patentansprüche**

1. Elastomere Mischungszusammensetzung mit verbesserten Reißeigenschaften und einer Viskosität bei 0,73 $sec^{-1}$ und bei 200 °C von 8 x $10^2$ bis 8 x $10^5$ Pa.s (8 x $10^3$ bis 8 x $10^6$ Poise), wobei die Zusammensetzung zu einem elastomeren Gegenstand formbar ist, enthaltend:
   (a) ein neutralisiertes sulfoniertes EPDM-Terpolymer, das eine Viskosität bei 0,73 $sec^{-1}$ und bei 200 °C von 5 x $10^3$ bis 5 x $10^5$ Pa.s (5 x $10^4$ Poise bis 5 x $10^6$ Poise) und 10 bis 50 Milligrammäquivalente Sulfonatgruppen je 100 g des sulfonierten EPDM-Terpolymers aufweist, wobei die Sulfonatgruppen neutralisiert sind mit einem Gegenion ausgewählt aus Antimon, Eisen, Aluminium, Blei und Gruppen I-A, II-A, I-B und II-B des Periodensystems der Elemente und Mischungen derselben; und
   (b) 2 bis 60 Gewichtsteilen eines Fluorkohlenwasserstoffelastomeren je 100 g von solchem sulfonierten EPDM-Terpolymer.

2. Zusammensetzung nach Anspruch 1, die weiterhin 1 bis 60 Gewichtsteile eines Weichmachers je 100 Teilen der sulfonierten EPDM-Terpolymeren enthält, wobei der Weichmacher ausgewählt ist aus Carbonsäuren mit 5 bis 30 Kohlenstoffatomen, basischen Salzen solcher Säuren und Mischungen derselben.

3. Zusammensetzung nach irgendeinem vorhergehenden Anspruch, in welcher das EPDM-Terpolymer aus 40 bis 75 Gew.% Ethylen, 15 bis 58 Gew.% Propylen und etwa 2 bis 20 Gew.% eines nichtkonjugierten Diens besteht.

4. Zusammensetzung nach Anspruch 3, in welcher das nicht-konjugierte Dien ausgewählt ist aus der Gruppe bestehend aus 1,4-Hexadien, Dicyclopentadien, 5-Alkyliden-2-norbornenen, 5-Alkylenyl-2-norbornenen und Tetrahydroinden.

5. Zusammensetzung nach Anspruch 4, in welcher das nicht-konjugierte Dien 5-Ethyliden-2-norbornen ist.

6. Zusammensetzung nach irgendeinem vorhergehenden Anspruch, welche weiterhin weniger als 300 Gewichtsteile eines Füllstoffs je 100 Teilen des sulfonierten EPDM-Terpolymers enthält.

7. Zusammensetzung nach irgendeinem vorhergehenden Anspruch, welche weiterhin weniger als 150 Gewichtsteile eines nichtpolaren Prozeßöls je 100 Teilen des sulfonierten EPDM-Terpolymers enthält.

8. Zusammensetzung nach Anspruch 2, in welcher der Weichmacher einen Schmelzpunkt von mindestens 25 °C hat und ausgewählt ist aus Carbonsäuren mit 8 bis 22 Kohlenstoffatomen, Metallsalzen dieser Carbonsäuren, Phenolen, Phosphaten, Amiden, Ammonium- und Aminsalzen dieser Carbonsäuren, und Aminen und Mischungen derselben.

9. Zusammensetzung nach den Ansprüchen 2 oder 8, in welcher der Weichmacher eine Kombination von einer Carbonsäure und Metallsalz dieser Carbonsäure ist, wobei ein Metallion des Metallsalzes ausgewählt ist aus Aluminium, Antimon, Eisen, Blei und Gruppen I‑A, II‑A, I‑B und II‑B des Periodensystems der Elemente und Mischungen derselben.

**Revendications**

1. Composition de mélange élastomère ayant des propriétés de résistance à la déchirure améliorées et une viscosité à 0,73 $sec^{-1}$ et à 200°C de 8 x $10^2$ à 8 x $10^5$ Pa.s (8 x $10^3$ à 8 x $10^6$ poises), ladite composition pouvant être moulée en un article élastomère, ladite composition comprenant :
   (a) un terpolymère d'EPDM sulfoné neutralisé ayant une viscosité à 0,73 $sec^{-1}$ et à 200°C de 5 x $10^3$ à 5 x $10^5$ Pa.s (5 x $10^4$ à 5 x $10^6$ poises) et 10 à 50 meq. de groupes sulfonate par 100 g dudit terpolymère d'EPDM sulfoné, lesdits groupes sulfonate étant neutralisés par un contre‑ion choisi parmi l'antimoine, le fer, l'aluminium, le plomb et les groupes I‑A, II‑A, I‑B et II‑B du Tableau Périodique des Eléments et leurs mélanges, et
   (b) 2 à 60 parties en poids d'un élastomère fluorohydrocarboné par 100 parties d'un tel terpolymère d'EPDM sulfoné.

2. Composition selon la revendication 1 comprenant par ailleurs 1 à 60 parties en poids d'un plastifiant par 100 parties desdits terpolymères d'EPDM sulfonés, le plastifiant étant choisi parmi les acides carboxyliques ayant 5 à 30 atomes de carbone, les sels basiques de ces acides et leurs mélanges.

3. Composition selon l'une quelconque des revendications précédentes, dans laquelle ledit terpolymère d'EPDM est constitué de 45 à 75 % en poids d'éthylène, de 15 à 58 % en poids de propylène et d'environ 2 à 10 % en poids d'un diène non conjugué.

4. Composition selon la revendication 3, dans laquelle ledit diène non conjugué est choisi parmi le groupe comprenant le 1,4‑hexadiène, le dicyclopentadiène, les 5‑alkylidène‑2‑norbornènes, les 5‑alkylényl‑2‑norbornènes et le tétrahydroindène.

5. Composition selon la revendication 4, dans laquelle ledit diène non conjugué est le 5‑éthylidène‑2‑norbornène.

6. Composition selon l'une quelconque des revendications précédentes, comprenant par ailleurs moins de 300 parties en poids d'une charge par 100 parties dudit terpolymère d'EPDM sulfoné.

7. Composition selon l'une quelconque des revendications précédentes, comprenant par ailleurs moins de 150 parties en poids d'une huile plastifiante non polaire par 100 parties dudit terpolymère d'EPDM sulfoné.

8. Composition selon la revendication 2, dans laquelle ledit plastifiant a un point de fusion d'au moins 25°C et est choisi parmi les acides carboxyliques ayant 8 à 22 atomes de carbone, les sels métalliques de ces acides carboxyliques, les phénols, les phosphates, les amides, les sels d'ammonium et d'amines de ces acides carboxyliques , les amines et leurs mélanges.

9. Composition selon la revendication 2 ou 8, dans laquelle ledit plastifiant est une combinaison d'un acide carboxylique et d'un sel métallique de cet acide carboxylique, un ion métal dudit sel métallique étant choisi parmi l'aluminium, l'antimoine, le fer, le plomb et les groupes I‑A, II‑A, I‑B et II‑B du Tableau Périodique des Eléments et leurs mélanges.

FIG. 1

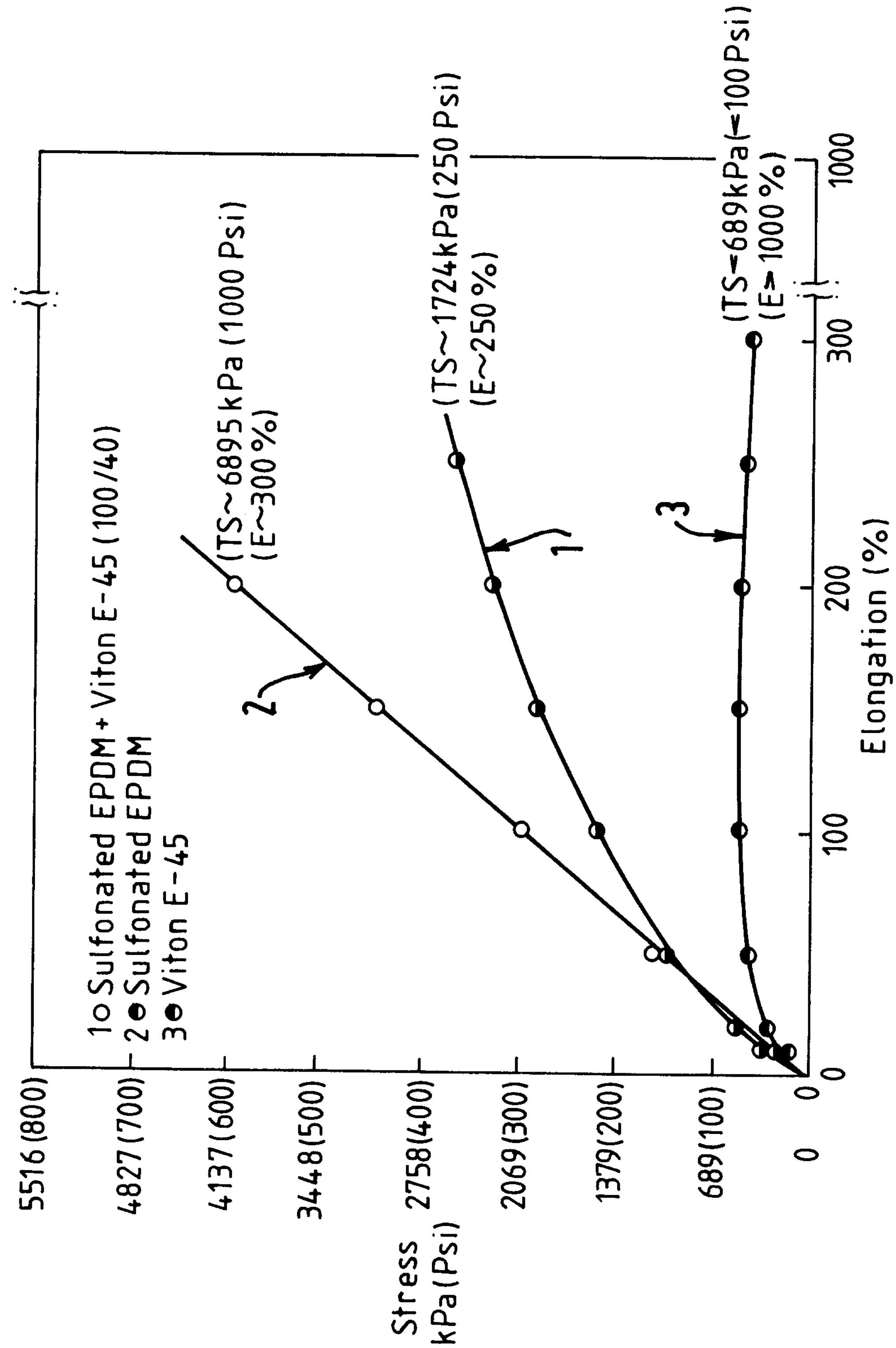
1 ○ Sulfonated EPDM + Viton E-45 (100/40)
2 ● Sulfonated EPDM
3 ● Viton E-45
(TS~6895 kPa (1000 Psi)
(E~300 %)
(TS~1724 kPa (250 Psi)
(E~250 %)
(TS<689 kPa (<100 Psi)
(E>1000 %)
1
2
3
Stress
kPa (Psi)
5516 (800)
4827 (700)
4137 (600)
3448 (500)
2758 (400)
2069 (300)
1379 (200)
689 (100)
0
0
100
200
300
1000
Elongation (%)